# EUROPEAN PATENT APPLICATION

(11) **EP 2 096 476 A1**
(43) Date of publication of application: **02.09.2009**
(21) Application number: 09002644.4
(22) Date of filing: 25.02.2009
(51) Int. Cl.: G02B 7/08, G02B 13/00

(54) **Lens driving apparatus**

(30) Priority: 29.02.2008 JP 2008049262
(71) Applicant: Mitsumi Electric Co., Ltd., Tama-shi, Tokyo 206-8567 (JP)
(72) Inventor: Takahashi, Mamoru, Tama-shi Tokyo (JP)
(74) Representative: Grünecker, Kinkeldey, Stockmair & Schwanhäusser Anwaltssozietät

(57) **Abstract**

A lens driving apparatus (10) is provided. A lens holder (14) has a cylindrical portion (140) adapted to hold a lens assembly. A driving coil (16) is fixed to the lens holder so as to be positioned in a circumference of the cylindrical portion. A yoke (20) has a permanent magnet opposed to the driving coil. A front spring (22) and a rear spring (24) are provided on both sides of the cylindrical portion of the lens holder in an optical axis direction of the cylindrical portion and movably support the lens holder in the optical axis direction in a state where the lens holder is positioned in a radial direction of the cylindrical portion. Each of the front spring and the rear spring has an inner peripheral end (222,242) attached to the lens holder and an outer peripheral end (224,244) attached to the yoke. The driving coil is formed in a 4N polygonal cylindrical shape (161,162) and the permanent magnet has 4N rectangular permanent magnet pieces (182-1,182-2), where N is an integer not less than 2.

## Description

### BACKGROUND

The present invention relates to a lens driving apparatus, and more particularly, to an auto-focus lens driving apparatus used for a small-sized portable camera.

A small-sized portable camera is mounted to a cellular phone equipped with a camera. In the small-sized portable camera, an auto-focus lens driving apparatus is used. In the past, various auto-focus lens driving apparatuses have been proposed.

For example, Patent Document 1 (Figs. 1 and 2) discloses a lens driving apparatus having an excellent impact resistance. The lens driving apparatus disclosed in Patent Document 1 includes a yoke which is formed in a substantially cylindrical shape, a base to which the yoke is mounted, a lens support body (lens holder) which is disposed on an inner peripheral side of the yoke, and a pair of plate springs which is attached to the lens support body. The pair of plate springs is called as front and rear springs. The front spring is disposed on a front side (one side) of the lens support body in an optical axis direction of the lens, and the rear spring is disposed on a rear side (the other side) in the optical axis direction of the lens. The yoke is formed in a substantially U-shape in a sectional view, where a magnet (permanent magnet) is disposed in the inside of the U-shape and a coil is disposed on an inner peripheral side of the magnet inside the U-shape. The magnet is fixed to the base via a rear spacer. The coil is fixed to an outer peripheral portion of the lens support body. The outer peripheral portion of the lens support body is inserted into the inside of the yoke. Accordingly, the outer peripheral portion of the lens support body is configured to be movable in a U-shape gap of the yoke. The yoke is fixed to an inner peripheral side of the base. An outer peripheral end of the rear spring is fixed to a base bottom portion of the base at a position between the rear spacer and the base bottom portion.

In the lens driving apparatus disclosed in Patent Document 1, the lens support body is formed in a substantially cylindrical shape, and accommodates the lens (a lens assembly and a barrel). The lens support body is attached so as to be movable in the inner peripheral side of the yoke in the optical axis. The front spring is configured as a substantially annular plate spring and includes an inner peripheral end and an outer peripheral end. The inner peripheral end of the front spring is sandwiched between the lens support body and a cap so as to be fixed to the lens support body. A front spacer is interposed between the yoke and the outer peripheral end of the front spring. The rear spring is formed in the substantially same shape as that of the front spring, and is configured as a substantially annular plate spring. The inner peripheral end of the rear spring is fixed to a rear end of the lens support body. The outer peripheral end of the rear spring is fixed to a position between the rear spacer and the base bottom portion of the base.

In the lens driving apparatus disclosed in Patent Document 1, the coil is formed in a cylindrical shape and the magnet is also formed in a cylindrical shape. Specifically, the magnet is formed by four plural circular-arc magnet pieces so as to be formed in a cylindrical shape as a whole.

Further, Patent Document 2 (Fig. 1) discloses a lens driving apparatus capable of smoothly driving a lens and of accurately aligning an optical axis direction of the lens with an imaging direction even when the imaging direction is inclined with respect to a perpendicular direction. The lens driving apparatus disclosed in Patent Document 2 includes a holder (lens holder) which holds a lens, an annular driving coil which is mounted to the holder, magnetic field generating means which is provided on the side of a fixed member and applies a radial driving magnetic field to the coil, a first spring member (front spring) which connects an upper portion of the holder to an upper portion of the fixed member, and a second spring member (rear spring) which connects a lower portion of the holder to a lower portion of the fixed member. Here, in the same manner as Patent Document 1, an inner peripheral end of the front spring is sandwiched between the front end of the lens holder and the cap so as to be fixed therebetween.

In Patent Document 2, the magnetic field generating means is formed by the combination of the cylindrical magnet provided on the outer peripheral side of the annular driving coil and the U-shaped cylindrical yoke made of a magnetic substance such as soft iron.

Furthermore, Patent Document 3 (Figs. 2 and 3) discloses a cellular phone equipped with a camera capable of reducing a time required for an auto focus. The cellular phone (lens driving apparatus) equipped with the camera disclosed in Patent Document 3 includes a holder (lens holder) which has a cylindrical portion of which one end is attached to a lens, a coil which is fixed to the holder so as to be positioned in a circumference of the cylindrical portion of the holder, a yoke which has a permanent magnet opposed to the coil, and a pair of plate springs which is provided on both sides of the cylindrical portion of the holder in the optical axis direction and supports the holder so as to be displaceable in the optical axis direction in the state where the holder is positioned in a radial direction. When a current is supplied to the coil so as to cause an interaction between a magnetic field of the permanent magnet and a magnetic field formed by the current flowing through the coil, it is possible to adjust a position of the lens in the optical axis direction. One of the pair of plate springs is called as an upper plate spring (front spring), and the other of the pair of plate springs is called as a lower plate spring (rear spring). An inner peripheral end of the upper plate spring (front spring) is sandwiched between an upper end (front end) of the holder and the stopper so as to be fitted to the holder.

In Patent Document 3, the coil is formed in a cylindrical shape, and plural permanent magnets are arranged in an inner peripheral surface of an outer casing portion of the yoke so as to have a gap with respect to the coil in an opposed manner. Each of the plural permanent magnets is formed in a circular-arc shape.

Additionally, Patent Document 4 (Figs. 15 and 16) discloses a lens driving apparatus in which a permanent magnet formed in a substantially flat-plate shape is used instead of a high-cost permanent magnet formed in a circular-arc shape.
Patent Document 1: Japanese Patent Publication No. 2005-128392A
Patent Document 2: Japanese Patent Publication No. 2006-293243A
Patent Document 3: Japanese Patent Publication No. 2006-258969A
Patent Document 4: Japanese Patent Publication No. 2006-050694A

In the structures disclosed in Patent Documents 1 to 3 described above, since the coil is formed in a cylindrical shape, the magnet (permanent magnet) is also formed in a cylindrical shape (circular-arc shape). However, it is difficult to manufacture the cylindrical (circular-arc) magnet (permanent magnet), and therefore, a cost of the magnet (permanent magnet) increases. As a result, a cost of the lens driving apparatus increases.

In one embodiment of Patent Document 4, the yoke is formed in a rectangular shape and four pieces of the permanent magnets each of which has a substantially flat-plate shape are provided in the yoke. In this structure, a large gap is formed between the cylindrical coil and the permanent magnets, and therefore, it is difficult to obtain large electromagnetic force. In another embodiment of Patent Document 4, the yoke is formed in a hexagonal shape and six pieces of the permanent magnets each of which has a substantially flat-plate shape are provided in the yoke. In this structure, it is still difficult to obtain large electromagnetic force. In addition, it is necessary to manufacture the hexagonal-shaped yoke. In the manufacturing process of the yoke, a plurality of yokes are manufactured by a single flat plate. However, a residual area of the flat plate is increased when manufacturing the hexagonal-shaped yoke. Accordingly, the manufacturing cost of the lens driving apparatus is increased.

### SUMMARY

It is therefore an object of the present invention to provide a lens driving apparatus capable of reducing the residual space between the cylindrical coil and the permanent magnets to obtain a large electromagnetic force while reducing manufacturing cost.

The other objects of the invention will be apparent according to the following description.

In order to achieve the above-mentioned object, according to an aspect of an embodiment of the present invention, there is provided a lens driving apparatus comprising: a lens holder having a cylindrical portion adapted to hold a lens assembly; a driving coil fixed to the lens holder so as to be positioned in a circumference of the cylindrical portion; a yoke having a permanent magnet opposed to the driving coil; and a front spring and a rear spring provided on both sides of the cylindrical portion of the lens holder in an optical axis direction of the cylindrical portion and movably supporting the lens holder in the optical axis direction in a state where the lens holder is positioned in a radial direction of the cylindrical portion, wherein each of the front spring and the rear spring has an inner peripheral end attached to the lens holder and an outer peripheral end attached to the yoke; and wherein the driving coil is formed in a 4N polygonal cylindrical shape and the permanent magnet has 4N rectangular permanent magnet pieces, where N is an integer not less than 2.

The N may be equal to 2. The cylindrical portion of the lens holder may have four contact surfaces which are protruded outward at an angular interval of 90° in the radial direction; and the driving coil may be adhered to the four contact surfaces. The driving coil may have four long side portions which are adhered to the four contact surfaces and four short side portions which are disposed between the four long side portions; and the permanent magnet may have four long rectangular permanent magnet pieces which are opposed to the four long side portions and four short rectangular permanent magnet pieces which are opposed to the four short side portions. The yoke may have an octagonal cylindrical outer casing portion; the outer casing portion may have four long side members opposed to each other and four short side members disposed between the four long side members; and the four long rectangular permanent magnet pieces may be disposed in inner walls of the four long side members and the four short rectangular permanent magnet pieces may be disposed in inner walls of the four short side members.

With the above configuration, the residual space can be reduced and a large electromagnetic force can be obtained while reducing manufacturing cost.

### BRIEF DESCRIPTION OF THE DRAWINGS

The above and other aspects of the present invention will become more apparent by describing in detail exemplary embodiments thereof with reference to the accompanying drawings, wherein:
Fig. 1 is an external perspective view showing a lens driving apparatus according to an embodiment of the invention;
Fig. 2 is a cross-sectional view showing the lens driving apparatus shown in Fig. 1; and
Fig. 3 is an exploded perspective view showing the lens driving apparatus shown in Fig. 1.

### DETAILED DESCRIPTION OF EXEMPLARY EMBODIMENTS

Hereinafter, an exemplary embodiment of the invention will be described with reference to the accompanying drawings.

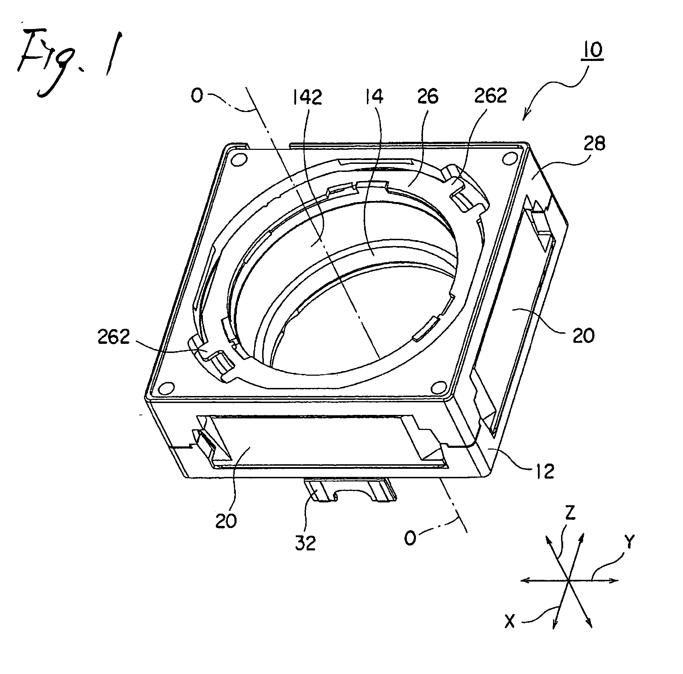

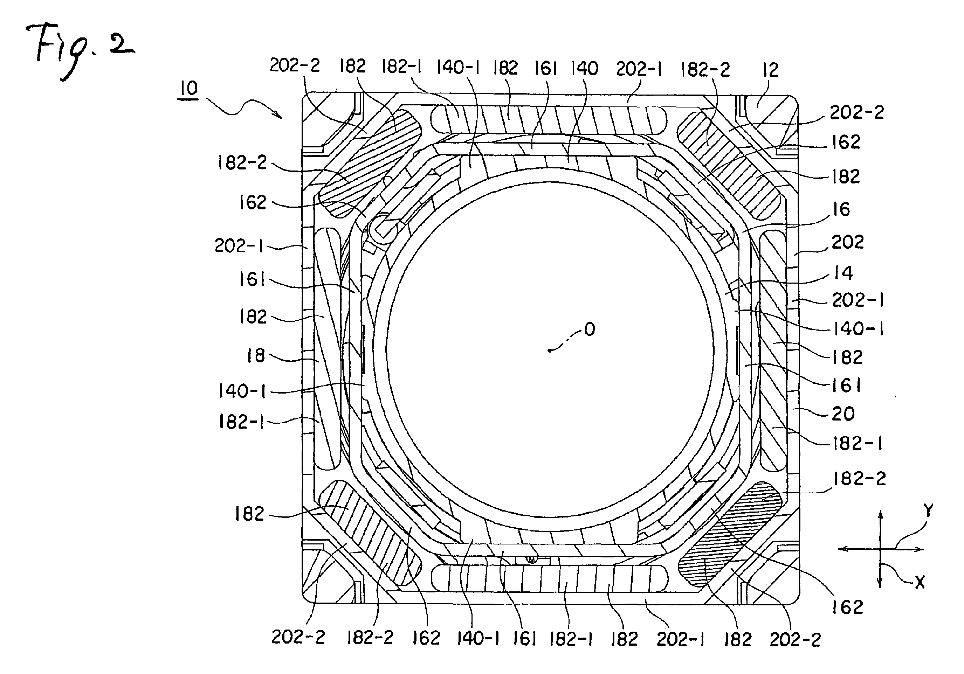

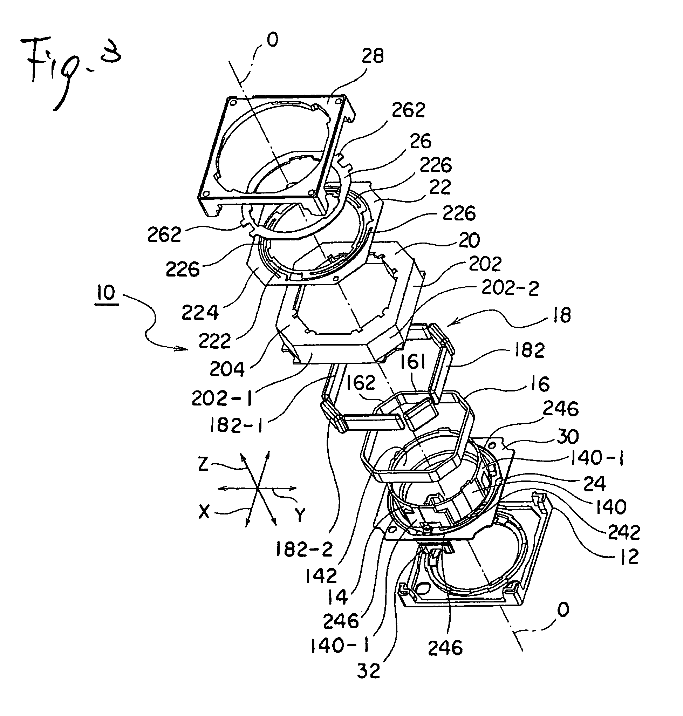

A lens driving apparatus 10 according to the embodiment of the invention will be described with reference to Figs. 1 to 3. Fig. 1 is an external perspective view showing the lens driving apparatus 10. Fig. 2 is a cross-sectional view showing the lens driving apparatus 10. Fig. 3 is an exploded perspective view showing the lens driving apparatus 10. Here, as shown in Figs. 1 to 3, an orthogonal coordinate system (X, Y, and Z) are used. In the orthogonal coordinate system (X, Y, and Z) shown in Figs. 1 to 3, the X axis indicates a longitudinal direction (depth direction), the Y axis indicates a traverse direction (width direction), and the Z axis indicates a vertical direction (height direction). Then, in the examples shown in Figs. 1 to 3, the vertical direction Z corresponds to a direction of an optical axis O of the lens.

However, at an actual use time, the longitudinal direction corresponds to the direction of the optical axis O, that is, the vertical direction Z. In other words, an upward direction of the Z axis corresponds to a forward direction, and a downward direction of the Z axis corresponds to a backward direction.

The lens driving apparatus 10 shown in the drawings is provided in a cellular phone equipped with an auto-focus camera. The lens driving apparatus 10 is used to move a lens assembly (barrel) (not shown) in the direction of the optical axis O. The lens driving apparatus 10 includes an actuator base 12 disposed in the lower side of (in rear of) the Z-axis direction (the direction of the optical axis O). A lower portion (rear portion) of the actuator base 12 is provided with an imaging element (not shown) disposed on a substrate. The imaging element picks up a subject image formed by the lens assembly and converts the pick-up image into an electrical signal. The imaging element is formed by, for example, a CCD (charge coupled device) type image sensor, a CMOS (complementary metal oxide semiconductor) type image sensor, or the like. Accordingly, a camera module is formed by the combination of the lens driving apparatus 10, the substrate, and the imaging element.

The lens driving apparatus 10 includes a lens holder 14 which includes a cylindrical portion 140 for holding the lens assembly (barrel), a driving coil 16 which is fixed to the lens holder 14 so as to be positioned in a circumference of the cylindrical portion 140, a yoke 20 which includes a permanent magnet 18 opposed to the driving coil 16, and a pair of plate springs 22 and 24 provided on both sides of the cylindrical portion 140 of the lens holder 14 in the direction of the optical axis O. The pair of plate springs 22 and 24 supports the lens holder 14 so as to be displaceable in the direction of the optical axis O in the state where the lens holder 14 is positioned in a radial direction. Among the pair of plate springs 22 and 24, one plate spring 22 is called as an upper plate spring, and the other plate spring 24 is called as a lower plate spring.

Additionally, as described above, at an actual use time, the upward direction of the Z axis (the direction of the optical axis O) corresponds to the forward direction and the downward direction of the Z axis (the direction of the optical axis O) corresponds to the backward direction. Accordingly, the upper plate spring 22 is called as a front spring, and the lower plate spring 24 is called as a rear spring.

As shown in Fig. 3, the yoke 20 is formed in an octagonal cylindrical shape. That is, the yoke 20 includes an octagonal cylindrical outer casing portion 202 and an octagonal ring-shaped end 204 provided on the upper end (front end) of the outer casing portion 202.

As shown in Fig. 2, the outer casing portion 202 of the yoke 20 is formed by four long side members 202-1 which are opposed to each other and four short side members 202-2 which are disposed between the four long side members 202-1. Accordingly, the driving coil 16 is formed in an octagonal cylindrical shape in accordance with the shape of the octagonal cylindrical yoke 20. That is, the driving coil 16 is formed by four long side portions 161 and four short side portions 162 which are disposed between the four long side portions 161. The cylindrical portion 140 of the lens holder 14 includes four contact surfaces 140-1 which protrude outward at an angular interval of 90° in a radial direction. The four long side portions 161 of the driving coil 16 are adhered to the four contact surfaces 140-1. That is, the driving coil 16 is adhered to the four contact surfaces 140-1.

On the other hand, the permanent magnet 18 is formed by four long rectangular permanent magnets 182-1 which are opposed to the four long side portions 161 of the driving coil 16, and four short rectangular permanent magnets 182-2 which are opposed to the four short side portions 162 of the driving coil 16. The four long rectangular permanent magnets 182-1 are disposed in the inner walls of the four long side members 202-1 of the outer casing portion 202 of the yoke 20, and the four short rectangular permanent magnets 182-2 are disposed in the inner walls of the four short side members 202-2 of the outer casing portion 202 of the yoke 20. Anyway, the permanent magnet 18 is formed by eight rectangular permanent magnet pieces 182 which are disposed on the side members of the octagonal cylindrical outer casing portion 202 of the yoke 20.

As shown in Fig. 2, the permanent magnet 18 is disposed on the inner peripheral surface of the outer casing portion 202 of the yoke 20 so as to have a gap with respect to the driving coil 16.

As described above, in the above-described embodiment, since the driving coil 16 is formed in an octagonal cylindrical shape, and the permanent magnet 18 is formed by the eight rectangular permanent magnet pieces 182, it is possible to manufacture the permanent magnet 18 at a low cost. As a result, it is advantageous in that the lens driving apparatus 10 is also manufactured at a low cost.

The front spring 22 is disposed on the front side of the lens holder 14 in the direction of the optical axis O, and the rear spring 24 is disposed on the rear side of the lens holder 14 in the direction of the optical axis O. The front spring 22 and the rear spring 24 have the substantially same configuration as each other. That is, the front spring 22 includes an inner peripheral end 222 attached to the lens holder 14 and an outer peripheral end 224 attached to the yoke 20. Three arm portions 226 are provided between the inner peripheral end 222 and the outer peripheral end 224. Each of the arm portions 226 is used to connect the inner peripheral end 222 to the outer peripheral end 224.

In the same manner, the rear spring 24 includes an inner peripheral end 242 attached to the lens holder 14 and an outer peripheral end (not shown) attached to the yoke 20. Three arm portions 246 are provided between the inner peripheral end 242 and the outer peripheral end. Each of the arm portions 246 is used to connect the inner peripheral end 242 to the outer peripheral end.

Additionally, the inner peripheral end is called as an inner ring, and the outer peripheral end is called as an outer ring.

The inner peripheral end 222 of the front spring 22 is sandwiched between the lens holder 14 and a stopper 26 so as to be fixed therebetween. In other words, the stopper 26 is fitted to the lens holder 14 so that the inner peripheral end 222 of the front spring 22 is sandwiched between the stopper 26 and the lens holder 14. On the other hand, the outer peripheral end 224 of the front spring 22 is sandwiched between the yoke 20 and a cover 28 so as to be fixed therebetween.

The stopper 26 has functions described below. That is, the stopper 26 has a function of allowing the inner peripheral end 222 of the front spring 22 to be high-precisely adhered to the lens holder 14 without a deviation. Accordingly, it is possible to improve a deviation of a VCM (voice coil motor) characteristic. Also, the stopper 26 has a function of improving an adhering strength of the front spring 22. Accordingly, it is possible to improve an impact resistance of the lens driving apparatus 10. Also, the stopper 26 has a function of preventing a deformation of the front spring 22 when a drop impact occurs in the lens driving apparatus 10. Accordingly, it is possible to also improve the impact resistance of the lens driving apparatus 10. Also, the stopper 26 has a function of determining a mechanical stroke of the lens driving apparatus 10.

Additionally, as described below, in this embodiment, the stopper 26 has a function of preventing a rotation of the lens holder 14.

On the other hand, the outer peripheral end of the rear spring 24 is fixed to the yoke 20 via a spacer 30. In other words, the spacer 30 and the outer peripheral end of the rear spring 24 are sandwiched between the yoke 20 and the actuator base 12 so as to be fixed therebetween. The inner peripheral end 242 of the rear spring 24 is fixed to a position on the rear end side of the lens holder 14.

An inner peripheral wall of the cylindrical portion 140 of the lens holder 14 is provided with a female screw 142. On the other hand, although it is not shown in the drawings, an outer peripheral wall of the lens assembly (barrel) is provided with a male screw threaded into to the female screw 142. Accordingly, it is possible to mount the lens assembly (barrel) to the lens holder 14 in such a manner that the lens assembly (barrel) is screw connected to the cylindrical portion 140 of the lens holder 14 in the direction of the optical axis O while being rotated about the optical axis O, the lens assembly (barrel) is accommodated in the lens holder 14, and then the lens assembly and the lens holder 14 are adhered to each other by means of an adhesive or the like.

At this time, the lens holder 14 may be rotated together, but in this invention, as described below, the lens holder 14 is completely prevented from being rotated.

When a current is supplied to the driving coil 16 so as to cause an interaction between a magnetic field of the permanent magnet 18 and a magnetic field formed by the current flowing through the driving coil 16, an electromagnetic force is generated. Therefore, it is possible to adjust a position of the lens holder 14 (lens assembly) in the direction of the optical axis O.

A sheet-shaped electrode 32 is disposed between the rear spring 24 and the actuator base 12. The sheet-shaped electrode 32 is used to supply a power to the driving coil 16.

As shown in the above-described embodiment, the stopper 26 includes two U-shaped rotation preventing-restraining portions 262 which are provided at symmetric positions corresponding to a rotation of two times by 180° with respect to the optical axis O. The U-shaped rotation preventing-restraining portions 262 are used as rotation preventing members for completely preventing the lens holder 14 from being rotated upon mounting the lens assembly to the cylindrical portion 140 of the lens holder 14. That is, upon mounting the lens assembly to the cylindrical portion 140 of the lens holder 14, it is possible to completely prevent the lens holder 14 from being rotated in such a manner that a jig (not shown) is inserted to the two U-shaped rotation preventing-restraining portions 262 to be held therein. At this time, a clearance between the stopper 16 and the cover 28 is ensured (maintained).

As described above, the exemplary embodiment of the invention is described, but may be, of course, modified into various forms by the person skilled in the art without departing from the spirit of the invention. For example, in the above-described embodiment, the driving coil 16 is formed in an octagonal cylindrical shape and the permanent magnet 18 is formed by the eight rectangular permanent magnet pieces 182. However, in general, the driving coil may be formed in a 4N (N is an integer not less than 2) polygonal cylindrical shape, and the permanent magnet may be formed by 4N number of rectangular permanent magnet pieces.

## Claims

1. A lens driving apparatus comprising:
a lens holder having a cylindrical portion adapted to hold a lens assembly;
a driving coil fixed to the lens holder so as to be positioned in a circumference of the cylindrical portion;
a yoke having a permanent magnet opposed to the driving coil; and
a front spring and a rear spring provided on both sides of the cylindrical portion of the lens holder in an optical axis direction of the cylindrical portion and movably supporting the lens holder in the optical axis direction in a state where the lens holder is positioned in a radial direction of the cylindrical portion,
wherein each of the front spring and the rear spring has an inner peripheral end attached to the lens holder and an outer peripheral end attached to the yoke; and
wherein the driving coil is formed in a 4N polygonal cylindrical shape and the permanent magnet has 4N rectangular permanent magnet pieces, where N is an integer not less than 2.

2. The lens driving apparatus as set forth in claim 1, wherein the N is equal to 2.

3. The lens driving apparatus as set forth in claim 2,
wherein the cylindrical portion of the lens holder has four contact surfaces which are protruded outward at an angular interval of 90° in the radial direction; and
wherein the driving coil is adhered to the four contact surfaces.

4. The lens driving apparatus as set forth in claim 3,
wherein the driving coil has four long side portions which are adhered to the four contact surfaces and four short side portions which are disposed between the four long side portions; and
wherein the permanent magnet has four long rectangular permanent magnet pieces which are opposed to the four long side portions and four short rectangular permanent magnet pieces which are opposed to the four short side portions.

5. The lens driving apparatus as set forth in claim 4,
wherein the yoke has an octagonal cylindrical outer casing portion;
wherein the outer casing portion has four long side members opposed to each other and four short side members disposed between the four long side members; and
wherein the four long rectangular permanent magnet pieces are disposed in inner walls of the four long side members and the four short rectangular permanent magnet pieces are disposed in inner walls of the four short side members.
